# EUROPEAN PATENT APPLICATION

(11) **EP 2 730 747 A1**
(43) Date of publication of application: **14.05.2014**
(21) Application number: 13191951.6
(22) Date of filing: 07.11.2013
(51) Int. Cl.: F01D 9/02

(54) **Transition duct having airfoil and hot gas path assembly for turbomachine**

(30) Priority: 08.11.2012 US 201213671839
(71) Applicant: General Electric Company, Schenectady, New York 12345 (US)
(72) Inventor: Davi, Michael Alan, Schenectady, NY New York 12345 (US); Genghis Khan, Khan Mohamed Khirullah, Niskayuna, NY New York 12309 (US); Farrell, Thomas Raymond, Greenville, SC South Carolina 29615 (US)
(74) Representative: Cleary, Fidelma

(57) **Abstract**

A hot gas path assembly (30) includes an outer support ring (36), an inner support ring (40), and a transition duct (32) coupled to the outer support ring (36) and the inner support ring (40). The transition duct (32) includes a conduit (50) defining a passage (52) extending between an inlet (54) and an outlet (56). The inlet (54) and the outlet (56) are generally aligned along a longitudinal axis (60). The transition duct (32) further includes an airfoil (70) disposed within the conduit (50) and configured to alter a hot gas flow direction (72).

## Description

### FIELD OF THE INVENTION

The present invention relates in general to turbomachines, and more particularly to transition ducts including airfoils therein and hot gas path assemblies in turbomachines.

### BACKGROUND OF THE INVENTION

Gas turbine systems are one example of turbomachines widely utilized in fields such as power generation. A conventional gas turbine system includes a compressor section, a combustor section, and a turbine section. Typically, compressed air is provided from the compressor section to the combustor section. The air entering the combustor section is mixed with fuel, and this mixture is combusted. Hot gases of combustion flow from the combustor section to the turbine section to drive the gas turbine system and generate power.

During maintenance of turbomachines, and particularly gas turbine systems, the various component thereof are typically removed for inspection and/or replacement. Many such components are difficult to access for removal due to their location within the turbomachine. In particular, the combustor section transition ducts are exceedingly difficult to remove. This is due to the location of the transition ducts inside the turbomachine as well as the hardware connecting the transition ducts inside the turbomachine. For example, the transition duct is generally removed during maintenance of the combustor section, but the downstream portion of the transition duct may be connected in or adjacent to the turbine section. Thus, accessing the transition duct connection hardware and physically removing the transition duct is difficult and time-consuming. In some cases, substantial portions of the turbomachine outage time may be devoted solely to removing, inspecting, and replacing the transition ducts.

Accordingly, an improved transition duct that facilitates easier and efficient inspection thereof would be desired in the art. Additionally, improved transition ducts that are retrofittable in existing turbomachines would be advantageous.

### BRIEF DESCRIPTION OF THE INVENTION

Aspects and advantages of the invention will be set forth in part in the following description, or may be obvious from the description, or may be learned through practice of the invention.

In one aspect of the present invention, a hot gas path assembly is disclosed. The hot gas path assembly includes an outer support ring, an inner support ring, and a transition duct coupled to the outer support ring and the inner support ring. The transition duct includes a conduit defining a passage extending between an inlet and an outlet. The inlet and the outlet are generally aligned along a longitudinal axis. The transition duct further includes an airfoil disposed within the conduit and configured to alter a hot gas flow direction.

In another aspect of the present invention, a transition duct for a gas turbine system is disclosed. The transition duct includes a conduit defining a passage extending between an inlet and an outlet. The inlet and the outlet are generally aligned along a longitudinal axis. The transition duct further includes an airfoil disposed within the conduit and configured to alter a hot gas flow direction.

These and other features, aspects and advantages of the present invention will become better understood with reference to the following description and appended claims. The accompanying drawings, which are incorporated in and constitute a part of this specification, illustrate embodiments of the invention and, together with the description, serve to explain the principles of the invention.

### BRIEF DESCRIPTION OF THE DRAWINGS

A full and enabling disclosure of the present invention, including the best mode thereof, directed to one of ordinary skill in the art, is set forth in the specification, which makes reference to the appended figures, in which:
FIG. 1 is a schematic illustration of a gas turbine system according to one embodiment of the present disclosure;
FIG. 2 is a side view of a hot gas path assembly according to one embodiment of the present disclosure
FIG. 3 is a perspective view of a plurality of transition ducts in a generally annular array according to one embodiment of the present disclosure;
FIG. 4 is a cross-sectional view of an inlet of a transition duct according to one embodiment of the present disclosure;
FIG. 5 is a cross-sectional view of an outlet of a transition duct according to one embodiment of the present disclosure;
FIG. 6 is a side view of a portion of a transition duct, illustrating a cut-away portion and the various sidewalls defining the cut-away portion, according to one embodiment of the present disclosure..

### DETAILED DESCRIPTION OF THE INVENTION

Reference now will be made in detail to embodiments of the invention, one or more examples of which are illustrated in the drawings. Each example is provided by way of explanation of the invention, not limitation of the invention. In fact, it will be apparent to those skilled in the art that various modifications and variations can be made in the present invention without departing from the scope or spirit of the invention. For instance, features illustrated or described as part of one embodiment can be used with another embodiment to yield a still further embodiment. Thus, it is intended that the present invention covers such modifications and variations as come within the scope of the appended claims and their equivalents.

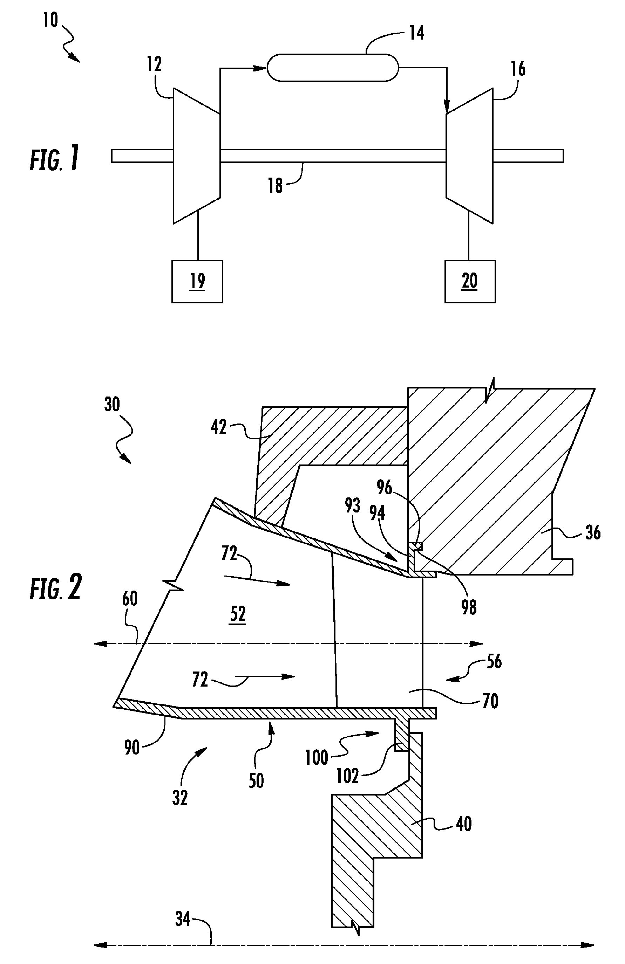

FIG. 1 is a schematic diagram of a turbomachine, which in the embodiment shown is a gas turbine system 10. The system 10 may include a compressor section 12, a combustor section 14, and a turbine section 16. The compressor section 12 and turbine section 16 may be coupled by a shaft 18. The shaft 18 may be a single shaft or a plurality of shaft segments coupled together to form shaft 18. An inlet section 19 may provide an air flow to the compressor section 12, and exhaust gases may be exhausted from the turbine section 16 through an exhaust section 20 and exhausted and/or utilized in the system 10 or other suitable system.

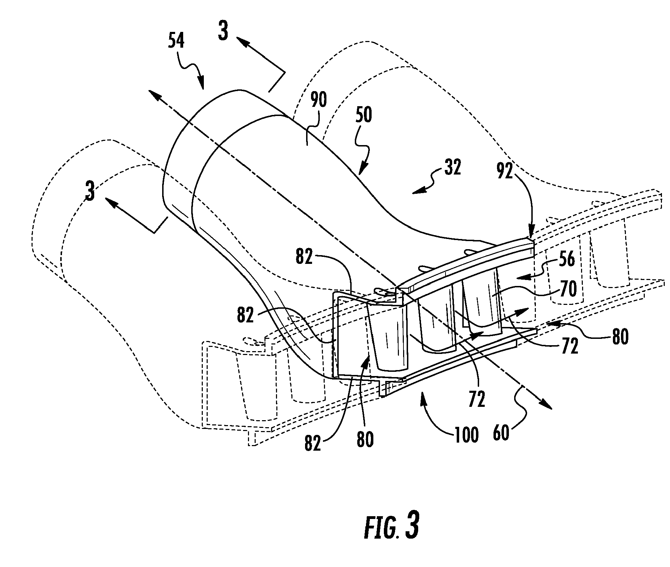

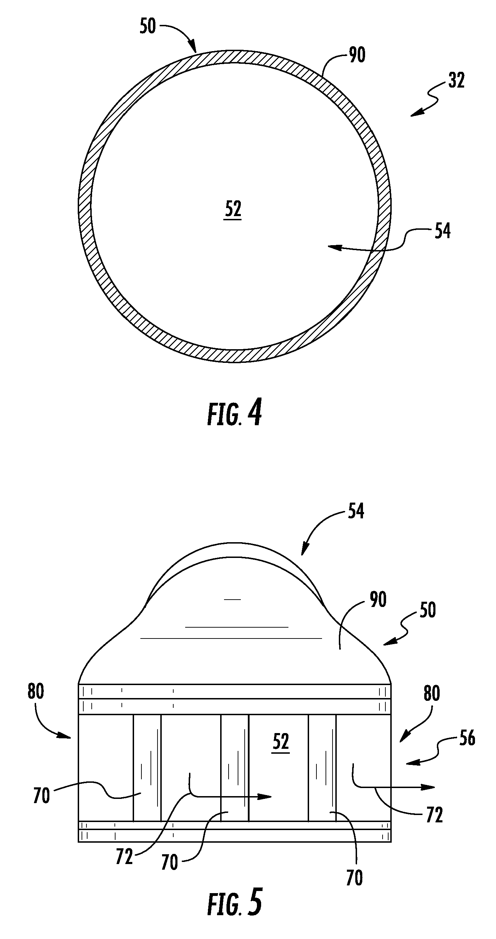

As shown in FIG. 2, the present disclosure is further directed to a hot gas path assembly 30. A hot gas path assembly 30 generally extends between and includes components of the combustor section 14 and turbine section 16, which may together include a plurality of hot gas path assemblies 30. Thus, each hot gas path assembly 30 may be disposed within and extend between the combustor section 14 and turbine section 16. The hot gas path assemblies 30 may, for example, be disposed in a generally annular array (such as about a centerline 34 of the turbomachine). As shown, a hot gas path assembly 30 may include a transition duct 32. The transition duct 32 may extend from the combustor section 14. In some embodiments, the transition duct 32 may be connected in the combustor section 14 to a fuel nozzle assembly (not shown). In other embodiments, the transition duct 32 may be connected to a combustor liner (not shown), which may in turn be connected to a fuel nozzle assembly. The transition duct 32 may be supported at an outlet end by various suitable components disposed in the combustor section 14. Such components may be disposed generally inwardly of the transition duct 32 (such as relative to a centerline 34 of the turbomachine) or outwardly of the transition duct 32 (such as relative to a centerline 34 of the turbomachine) or otherwise suitably disposed to support the transition duct. For example, the hot gas path assembly 30 may include an outer support ring 36, which for example may include a shroud mounted in a casing. The outer support ring 36 may be disposed generally outward of the transition duct 32. The transition duct 32 may be directly coupled to the outer support ring 36. The hot gas path assembly 30 may further include an inner support ring 40, which may be disposed generally inward of the transition duct 32. The transition duct 32 may be directly coupled to the inner support ring 40. The hot gas path assembly 30 may further include a bracket 42, which may be disposed generally outward of the transition duct 32. The transition duct 32 may be directly coupled to the bracket 42. Referring now to FIGS. 3 through 6, a transition duct 32 according to the present disclosure includes a conduit 50 defining a passage 52 extending between an inlet 54 and an outlet 56. Each of the inlet 54 and the outlet 56 may have any suitable shape and/or size. In some embodiments, for example, the inlet 54 may have an oval or circular cross-sectional shape, as shown in FIG. 4. In other embodiments, the inlet 54 may have a quadrilateral, rectangular, or square shape, or any other suitable polygonal shape. In some embodiments, the outlet 56 may have quadrilateral or rectangular cross-sectional shape, as shown in FIG. 5. In other embodiments, the outlet 56 may have a square cross-sectional shape, an oval or circular cross-sectional shape, or any other suitable polygonal shape. It should be understood that various shapes as discussed herein may have suitable linear or curvilinear legs as required to accommodate the positioning of the transition duct 32 in the turbomachine. For example, in many turbomachines, a plurality of transition ducts 32 may be disposed in a generally annular array. A quadrilateral shape, such as a quadrilateral shaped outlet 56, may have linear and/or curvilinear legs. In some embodiments, outward and inward legs may, for example, be curvilinear to accommodate the positioning of the transition duct 32 in a generally annular array, thus allowing, for example, proper sealing between transition ducts 32, such as discussed below.

Each transition duct 32 may extend generally along a longitudinal axis 60, such that the inlet 54 and outlet 56 of the transition duct 32 are generally aligned along the longitudinal axis 60. Thus, the plane defined by at least one the inlet 54 or the outlet 56 may be generally perpendicular to the longitudinal axis 60, and a centerpoint 62 of the inlet and a centerpoint 64 of the outlet may be aligned with and intersect the longitudinal axis 60.

As further shown in FIGS. 2, 3, 5 and 6, a transition duct 32 according to the present disclosure may advantageously include one or more airfoils 70. Each airfoil 70 may be generally disposed within the conduit 50, preferably adjacent to the outlet 56 as shown, and configured to alter a hot gas flow direction 72. Thus, hot gas flow through the transition duct 32 may be redirected upon interacting with a airfoil 70, as shown in FIG. 3. A airfoil 70 may have a generally aerodynamic shape, including a pressure side, a suction side, a leading edge, and a trailing edge, as shown, or may have any other suitable shape for altering the hot gas flow direction 72. By including airfoils 70 in the transition duct 32, the need for a separated stage one nozzle assembly between the transition duct 32 and the remainder of the turbine section 16 is eliminated. Further, the need for various components between the transition duct 32 and eliminated stage one nozzle assembly is eliminated. For example, the aft frame of the transition duct 32 and the various seals disposed in the aft frame are eliminated. Potential leakage between the transition duct 32 and stage one nozzle assembly is thus eliminated, increasing the efficiency of the turbomachine in general. Further, because such stage one nozzle assembly is eliminated, the transition duct 32 can be coupled to various components on the outlet end which may be disposed in the turbine section, such as the outer support ring 36. As such, removal, inspection, and replacement of the transition duct 32 can advantageously be performed during turbine section 16 maintenance, rather than combustor section 14 maintenance, thus resulting in easier and more efficient maintenance of the transition duct 32, the hot gas path assembly 30, and the overall turbomachine.

As shown in FIGS. 3 and 5, a transition duct 32 according to the present disclosure may further include one or more cut-away portions 80. A cut-away portion 80 may be defined in the conduit 50, such that a portion of the conduit 50 is generally open, exposing the passage 52 thereof. As shown, a cut-away portion 80 may, for example, extend from the outlet 56. Further, a cut-away portion 80 may be defined by a plurality of sidewalls 82. In exemplary embodiments, three sidewalls 82 may define a cut-away portion 80, as shown. In other embodiments, one, two, four or more sidewalls 82 may define the cut-away portion 80.

As shown, a transition duct 32 in exemplary embodiments includes two cut-away portions 80. The cut-away portions 80 may be generally opposed. Further, as shown, each cut-away portion 80 may be configured to interact with a corresponding cut-away portion 80 of an adjacent transition duct 32. For example, each sidewall 82 of a cut-away portion 80 may contact a corresponding sidewall 82 of the adjacent transition duct 32. The corresponding cut-away portions 80 may thus mate, allowing hot gas flow to mix and flow within the various transition ducts 32 through the corresponding cut-away portions 80. As discussed, in a turbomachine, a plurality of transition ducts 32 may be aligned in a generally annular array. The cut-away portions 80 may be generally opposing and positioned to interact with cooresponding cut-away portions 80 of adjacent transition ducts 32 in the generally annular array. Similarly, the sidewalls 82 defining each cut-away portion 80 may be positioned to contact with corresponding sidewalls 82 of adjacent transition ducts 32 in the generally annular array.

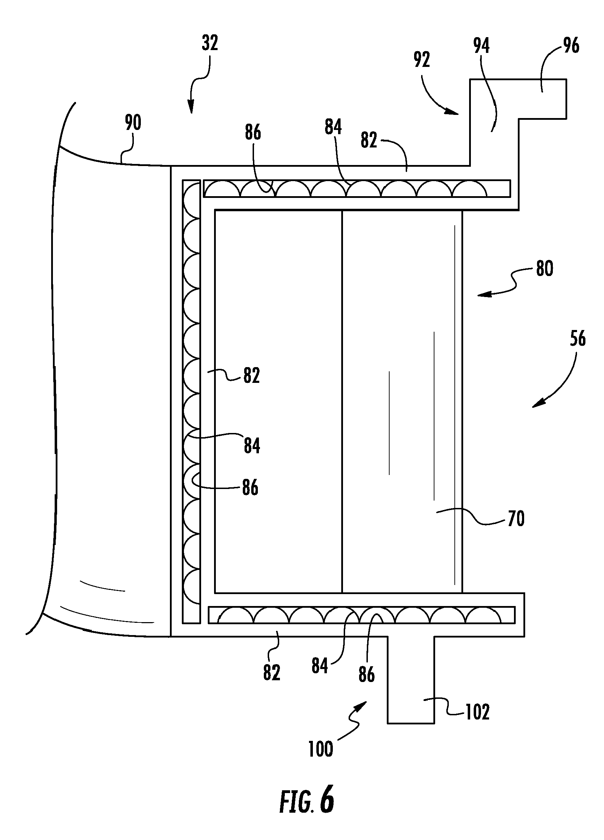

Further, in exemplary embodiments, seal members 84 may be positioned between the various adjacent transition ducts 32 to prevent leakage therebetween. As shown in FIG. 6, for example, one or more channels 86 may be defined in each sidewall 82. Each channel 86 may be configured to accommodate one or more seal members 84 therein. For example, a width-wise portion of a seal member 84 may be disposed in a channel 86. The remaining portion of the seal member 84 not disposed in a channel 86 may be disposed in a corresponding channel 86 of an adjacent transition duct 32. The seal member 84 may thus provide a seal between the adjacent transition ducts 32, preventing leakage into or out from between the adjacent transition ducts 32.

Any suitable seal member 84 may be utilized in accordance with the present disclosure. The seal member 84 may have a plurality of curvilinear legs, as shown in FIG. 6, or a plurality of linear legs, or may have any other suitable shape. The seal member may be formed from a suitable metal or metal alloy, a polymer, or a ceramic. In exemplary embodiments, the seal member 84 may be resilient.

A transition duct 32 according to the present disclosure may further include one or more interface features. The interface features may each extend from an outer surface 90 of the conduit 50. Each interface feature may be configured for interfacing with a hot gas path assembly 30 component. For example, an outer interface feature 92 may be positioned outward relative to the transition duct 32, and may be configured to interface with an outer support ring 36. As shown, the interface feature 92 may include a rail 94 and a tab 96 extending from the rail 94. A mating channel 98 may be defined in the outer support ring 36. The tab 96 and channel 98 may mate, such that the interface feature 90 and outer support ring 36 are coupled together. Additionally or alternatively, an inner interface feature 100 may be positioned inward relative to the transition duct 32, and may be configured to interface with an inner support ring 40. As shown, the interface feature 100 may include a rail 102. The rail 102 may contact and form a lap joint with the inner support ring 40, such that the interface feature 100 and inner support ring 40 are coupled together. The interface features may thus provide direct contact between the transition duct 32 and other hot gas path assembly 40 components, such as the outer support ring 36 and inner support ring 40.

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they include structural elements that do not differ from the literal language of the claims, or if they include equivalent structural elements with insubstantial differences from the literal languages of the claims.

## Claims

1. A transition duct (32) for a gas turbine system (10), comprising:
a conduit (50) defining a passage (52) extending between an inlet (54) and an outlet (56), the inlet (54) and the outlet (56) generally aligned along a longitudinal axis (60); and
an airfoil (70) disposed within the conduit (50) and configured to alter a hot gas flow direction (72).

2. The transition duct (32) of claim 1, wherein the inlet (54) has an oval cross-sectional shape and the outlet has a quadrilateral cross-sectional shape (56).

3. The transition duct (32) of claim 1 or 2, wherein the quadrilateral cross-sectional shape (56) is a rectangular cross-sectional shape.

4. The transition duct (32) of any of claims 1 to 3, wherein opposing cut-away portions (80) are defined in the conduit (50), each of the opposing cut-away portions (70) extending from the outlet (56), and defined by a plurality of sidewalls (82), each of the plurality of sidewalls (82) configured for contacting a corresponding sidewall (82) of an adjacent transition duct (32).

5. The transition duct (32) of claim 4, wherein each of the plurality of sidewalls (82) defines a channel (86) therein, and further comprising a seal member (84) disposed in each of the plurality of channels (86).

6. The transition duct (32) of any preceding claim, wherein the conduit (50) further comprises an inner interface feature (100) and an outer interface feature (92), each of the inner and outer interface features (100,92) extending from an outer surface of the conduit (50).

7. The transition duct (32) of any preceding claim, wherein the airfoil (70) is a plurality of airfoils.

8. A hot gas path assembly (30), comprising:
an outer support ring (36);
an inner support ring (40); and
the transition duct (32) of any preceding claim, coupled to the outer support ring (36) and the inner support ring (40).

9. The hot gas path assembly of claim 8, when dependent on claim 6, wherein the inner interface (100) feature is coupled to the inner support ring (40), and the outer interface feature (92) is coupled to the outer support ring (36).

10. A turbomachine, comprising:
an inlet section (19);
an exhaust section (20);
compressor section (12);
a combustor section (14);
a turbine section (16); and
a plurality of hot gas path assemblies (30) disposed within and extending between the combustor section (14) and the turbine section (16), each of the plurality of hot gas path assemblies as recited in claim 8 or 9.
